(19) Europäisches Patentamt
European Patent Office
Office européen des brevets

(11) **EP 3 133 187 B1**

(12) **EUROPÄISCHE PATENTSCHRIFT**

(45) Veröffentlichungstag und Bekanntmachung des Hinweises auf die Patenterteilung:
**06.03.2019** **Patentblatt 2019/10**

(51) Int Cl.:
*C23C 22/05* (2006.01)   *C25D 11/34* (2006.01)
*C23C 22/82* (2006.01)   *C23C 22/73* (2006.01)
*C23C 22/78* (2006.01)

(21) Anmeldenummer: **16179382.3**

(22) Anmeldetag: **14.07.2016**

(54) **VERFAHREN ZUR THERMISCHEN BEHANDLUNG EINES MIT EINER KONVERSIONSSCHICHT BESCHICHTETEN SCHWARZBLECHS**

METHOD FOR THE THERMAL TREATMENT OF A BLACK SHEET COATED WITH A CONVERSION LAYER

PROCEDE DE TRAITEMENT THERMIQUE D'UNE TOLE NOIRE REVETUE D'UNE COUCHE DE CONVERSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.08.2015   DE 102015113878**

(43) Veröffentlichungstag der Anmeldung:
**22.02.2017   Patentblatt 2017/08**

(73) Patentinhaber:
• **ThyssenKrupp Rasselstein GmbH**
  **56626 Andernach (DE)**
• **thyssenkrupp AG**
  **45143 Essen (DE)**

(72) Erfinder:
• **Marmann, Andrea**
  **54498 Piesport (DE)**
• **Lommel, Tanja**
  **56567 Neuwied (DE)**
• **Sauer, Reiner**
  **56566 Heimbach-Weis (DE)**
• **Kasdorf, Tatjana**
  **56626 Andernach (DE)**
• **Schleich, Martin**
  **56648 Saffing (DE)**
• **Malejczyk, Monika**
  **56598 Rheinbrohl (DE)**
• **Rink, Hans-Peter**
  **56761 Kaifenheim (DE)**

(74) Vertreter: **Charrier Rapp & Liebau**
  **Patentanwälte PartG mbB**
  **Fuggerstrasse 20**
  **86150 Augsburg (DE)**

(56) Entgegenhaltungen:
**EP-A1- 2 826 569      EP-A1- 2 845 929**
**DE-A1- 10 161 383      GB-A- 1 234 181**

**Beschreibung**

Die Erfindung betrifft ein Verfahren zur thermischen Behandlung eines mit einer Konversionsschicht beschichteten Schwarzblechs nach dem Oberbegriff des Anspruchs 1, sowie die Anwendung des Verfahrens bei der Herstellung eines gegen Korrosion geschützten Schwarzblechs.

Zum Schutz metallischer Oberflächen vor Korrosion sind Verfahren bekannt, in denen die metallische Oberfläche mit einer Beschichtung aus einem anderen, in der Regel unedleren Metall (wie z.B. Zink und Chrom) versehen wird. So ist es z.B. bekannt Stahlbleche mit Zink oder Chrom oder auch mit Zinn (welches allerdings im Vergleich zu Stahl edler ist) zu beschichten. Zur Herstellung von Verpackungen, insbesondere im Lebensmittelbereich, werden bspw. sehr umfangreich verzinnte Feinstbleche (Weißbleche) verwendet. Weißbleche zeichnen sich durch eine sehr gute Korrosionsbeständigkeit und ein gutes Umformverhalten sowie ihre Schweißbarkeit aus und eignen sich deshalb sehr gut zur Herstellung von Verpackungen, wie z.B. Getränkedosen.

Um auch die metallische Beschichtung, bspw. die Zinnbeschichtung bei Weißblech, gegen Korrosion zu schützen und einen guten Haftgrund für Lackierungen und Kunststoffbeschichtungen zu erzeugen, werden auf der Oberfläche der metallischen Beschichtung häufig Konversionsschichten aufgebracht.

Unter Konversionsschichten versteht man metallische, meist anorganische, sehr dünne Schichten auf einer Metalloberfläche, die in der Regel durch chemische Reaktion einer wässrigen Behandlungslösung mit dem metallischen Untergrund erzeugt werden. Der Auftrag erfolgt bspw. im No-rinse-Verfahren mittels Rollcoater oder Sprühsystem. Konversionsschichten gewährleisten insbesondere bei Feinstblechen einen sehr wirksamen Korrosionsschutz, einen guten Haftgrund für Lackierungen und Kunststoffe und sie vermindern Oberflächenreibung und Abrieb.

In Abhängigkeit vom Substrat unterscheidet man zwischen Eisen-, Zink- oder Mangan-Phosphatieren, elektrolytischem Phosphatieren oder Chromat-, Oxalat- und Anodisierungs-Verfahren. Als sehr wirksamer Korrosionsschutz haben sich chromhaltige Konversionsschichten erwiesen. Bei einer Chromatierung wird die metallische Oberfläche mit einer sauren, Chrom(VI)-Ionen enthaltenden Lösung behandelt, wobei Chrom(VI) zu Chrom(III) reduziert wird. Durch die Behandlung bildet sich auf der Metalloberfläche eine vor Korrosion schützende chromhaltige Schicht. Aus der GB 1234181-A ist eine chromhaltige Konversionsbeschichtung für Metalloberflächen bekannt, welche Bestandteile aus sechs- und dreiwertigem Chrom enthält.

Chrom(VI)-Verbindungen sind allerdings akut toxisch und karzinogen. Für Anwendungen im Automobilbau und in Haushaltsgeräten wurde in der EU bereits die Passivierung von Metalloberflächen mit Chrom(VI)-haltigen Substanzen verboten. Aus diesem Grund wurden im Stand der Technik chromfreie Konversionsschichten entwickelt. So sind bspw. aus der WO 97/40208-A und der EP 2532769 A1 Verfahren zur Erzeugung chromfreier Konversionsschichten auf Zink- bzw. Aluminium-Oberflächen bekannt. In der WO 2008/119675 sind ferner Behandlungslösungen zur Erzeugung von chromfreien Konversionsschichten beschrieben, die Oxo-Kationen und Halogen-Komplexionen enthalten, die zu farblosen und leicht irisierenden Konversionsschichten führen.

Weißblech besitzt hervorragende Eigenschaften als Verpackungsmaterial für Lebensmittel und wird seit vielen Jahrzehnten zu diesem Zweck hergestellt und verarbeitet. Zinn, welches beim Weißblech die korrosionshemmende Beschichtung darstellt, ist allerdings aufgrund der weltweiten Verknappung der Ressource zu einem relativ wertvollen Material geworden. Die EP 2845929 A1 offenbart ein Verfahren zur Beschichtung eines Weißblechs mit einer Polymerbeschichtung, insbesondere aus PET, PP oder PE.

Als Alternative zu Weißblech sind insbesondere zur Verwendung als Verpackungsstahl aus dem Stand der Technik elektrolytisch mit Chrom beschichtete Stahlbleche bekannt, welche als Zinn-freies Stahlblech ("Tin Free Steel", TFS) oder als "Electrolytic Chromium Coated Steel (ECCS)" bezeichnet werden. Diese zinnfreien Stahlbleche zeichnen sich einerseits durch eine gutes Haftvermögen für Lacke oder organische Schutzbeschichtungen (bspw. aus PP oder PET) aus, weisen andererseits bei der Durchführung des Beschichtungsverfahrens aufgrund der toxischen und gesundheitsgefährdenden Eigenschaften der zur Beschichtung verwendeten Chrom-VI-haltigen Materialien allerdings erhebliche Nachteile auf.

Diese Nachteile können mit dem aus der DE 10 2013107506 A1 bekannten Verfahren zur Passivierung von bandförmigem Schwarzblech vermieden werden. Die DE 10 2013107506 A1 zeigt eine Möglichkeit auf, Schwarzblech ohne den Einsatz von chromhaltigen Behandlungslösungen zu passivieren und dadurch gegen Korrosion zu schützen. Die nach diesem Verfahren behandelten Schwarzbleche können als Ersatz für Weißblech und für zinnfreies Stahlblech (TFS bzw. ECCS) bspw. bei der Herstellung von Metallverpackungen wie Dosen eingesetzt werden. Für die Verwendung des in der DE 10 2013107506 A1 beschriebenen Schwarzblechs zur Herstellung von Dosen wird die passivierte Schwarzblechoberfläche zur Verbesserung der Korrosionsbeständigkeit zumindest auf einer Seite mit einem organischen Überzug beschichtet, wie z.B. Lacke oder Polymerbeschichtungen aus PET, PP oder PE, oder Kombinationen davon. Die beschichtete Seite bildet bei der Herstellung von Dosen die Doseninnenseite, welche mit säurehaltigen Inhaltsstoffen in Berührung kommen kann und deshalb besonders gegen Korrosion geschützt werden muss, wobei auch doppelseitige Beschichtungen möglich sind, um auch die Dosenausenseite gegen Korrosion in feuchter Atmosphäre zu schützen.

Es hat sich allerdings bei diesen Schwarzblechen gezeigt, dass organische Überzüge keine ausreichende Haftung auf der passivierten Schwarzblechoberfläche aufweisen. Insbesondere bei einer nur kurzzeitigen Trocknung im Bereich von Sekunden, wie sie bei herkömmlichen Coilcoatingverfahren durchgeführt werden, in denen sich das bandförmige Schwarzblech mit Bandgeschwindigkeiten von mehr als 200 m/min bewegt, hat sich gezeigt, dass die organischen Überzüge (Lack bzw. Polymerbeschichtung) auf der mit einer Konversionsschicht passivierten Schwarzblechoberfläche bei der späteren Umformung (bspw. in Tiefziehverfahren der Dosenherstellung) nicht in ausreichendem Maße am Schwarzblech haften. Vergleichsversuche haben ergeben, dass bei mechanischen Belastungen, wie sie in Umformprozessen auftreten, eine Ablösung der Konversionsschicht von der Stahlblechoberfläche des Schwarzblechs erfolgen kann. Zur Verbesserung der Haftung von organischen Überzügen auf der mit der Konversionsschicht passivierten Schwarzblechoberfläche wird in der DE 10 2013107506 A1 die Verwendung eines Haftvermittlers vorgeschlagen, welcher der Behandlungslösung zugemischt wird, die zur Ausbildung der Konversionsschicht auf die Oberfläche des Schwarzblechs aufgebracht wird. Dies kann jedoch nur die Haftung des organischen Überzugs auf der Konversionsschicht verbessern, vermeidet allerdings nicht, dass sich die Konversionsschicht bei einer starken mechanischen Belastung von der Oberfläche des Schwarzblechs ablöst.

Die Aufgabe der vorliegenden Erfindung besteht daher in der Bereitstellung eines chromfreien Verpackungsstahls, welcher als Ersatz für zinnfreies Stahlblech (TFS bzw. ECCS) und als Ersatz für Weißblech geeignet ist und sowohl hinsichtlich der Korrosionsbeständigkeit als auch bezüglich des Haftvermögens für organische Überzüge wie Lacke oder Polymerbeschichtungen vergleichbar mit Weißblech oder zinnfreiem Stahlblech sein soll. Insbesondere soll ein Verfahren aufgezeigt werden, mit dem die Haftung von organischen Überzügen auf dem Stahlsubstrat verbessert wird.

Gelöst wird diese Aufgabe durch ein Verfahren zur thermischen Behandlung eines mit einer chromfreien Konversionsschicht beschichteten Schwarzblechs zur Verbesserung der Haftung eines organischen Überzugs mit den Merkmalen des Anspruchs 1. Bevorzugte Ausführungsformen des Verfahrens sind den abhängigen Ansprüchen zu entnehmen, wobei der Anspruch 7 und die darauf rückbezogenen Ansprüche bevorzugte Anwendungen des thermischen Behandlungsverfahrens bei der Herstellung eines gegen Korrosion geschützten Schwarzblechs aufzeigen.

Bei dem erfindungsgemäßen Verfahren wird ein mit einer Konversionsschicht beschichtetes Schwarzblech einer thermischen Behandlung unterzogen, um die Haftung der Konversionsschicht sowie eines organischen Überzugs, der vor, während oder nach der thermischen Behandlung auf die Konversionsschicht aufgebracht wird, zu verbessern, wobei das mit der Konversionsschicht beschichtete Schwarzblech während einer thermischen Behandlungsdauer (t) von 0,1 Sekunden bis 30 Sekunden auf eine Temperatur zwischen 240°C und 320°C oder bevorzugt während einer thermischen Behandlungsdauer (t) von 0,1 Sekunden bis 5 Sekunden auf eine Temperatur zwischen 280°C und 310°C erhitzt wird. Besonders bevorzugt liegt die thermische Behandlungsdauer (t) zwischen 0,1 Sekunden und 1 Sekunde, wobei das konversionsbeschichtete Schwarzblech auf eine Temperatur zwischen 290°C und 310°C erhitzt wird. Die Erhitzung erfolgt dabei bevorzugt mittels Induktion.

Es hat sich überraschend gezeigt, dass durch eine derartige kurzzeitige thermische Behandlung des mit der Konversionsschicht beschichteten Schwarzblechs die Haftung der Konversionsschicht und dadurch auch die Haftung eines organischen Überzugs auf der Oberfläche des passivierten Schwarzblechs wesentlich verbessert werden kann. Die thermische Behandlung kann dabei auch nach dem Aufbringen eines organischen Überzugs auf die Oberfläche des konversionsbeschichteten Schwarzblechs durchgeführt werden, ohne dass der organische Überzug durch die vergleichsweise hohen Temperaturen der thermischen Behandlung beschädigt werden könnte. Dies liegt an der sehr kurzen Behandlungsdauer (t) der thermischen Behandlung, welche bevorzugt unter 5 Sekunden und besonders bevorzugt unter 1 Sekunde liegt.

Durch Vergleichsversuche und Analysen konnte ermittelt werden, dass zur Erzielung einer guten Haftung eines organischen Überzugs auf der Schwarzblechoberfläche eine thermische Behandlung in einem bevorzugten Arbeitsbereich durchzuführen ist, wobei der bevorzugte Arbeitsbereich in einem Temperatur-Zeit-Diagram durch einen von der Behandlungszeit t abhängigen Verlauf einer Maximaltemperatur $T_{max}$ (t) und einer Minimaltemperatur $T_{min}$ (t) begrenzt wird und der zeitliche Verlauf der Maximaltemperatur $T_{max}$ (t) und der Minimaltemperatur $T_{min}$ (t) mit steigender Behandlungsdauer t stetig abnimmt. In angenäherter Betrachtung können die Kurven des zeitlichen Verlaufs der Maximaltemperatur $T_{max}$ (t) und der Minimaltemperatur $T_{min}$ (t) jeweils durch eine lineare Funktion oder ein Polynom höheren Grades, insbesondere durch eine quadratische Funktion beschrieben werden. Die erfindungsgemäße Einschränkung der thermischen Behandlungsdauer auf kurze Behandlungsdauern im bevorzugten Bereich von 0,1 bis 5 Sekunden oder besonders bevorzugt von weniger als 1 Sekunde ermöglicht die Durchführung der thermischen Behandlung im Bandbeschichtungsverfahren (Coilcoating) an einem mit einer Bandgeschwindigkeit bewegten Schwarzblech in Bandform, wobei die Bandgeschwindigkeiten in üblichen Bandbeschichtungsverfahren typischerweise bei mehr als 30 m/min liegen.

In dem Bandbeschichtungsverfahren wird auf das laufende Schwarzblechband bspw. zunächst eine wässrige und chromfreie Behandlungslösung zur Ausbildung der Konversionsschicht aufgebracht und getrocknet. Danach wird das laufende, konversionsbeschichtete Schwarzblechband einer thermischen Behandlung gemäß der Erfindung unterzogen. Die thermische Behandlung kann dabei innerhalb oder außerhalb einer Beschichtungsanlage erfolgen, in der auf das Schwarzblech ein organischer Überzug aufgebracht wird, wobei die thermische Behandlung dabei bei laufendem Schwarzblechband erfolgt, indem das Schwarzblechband mit der vorgegebenen Bandgeschwindigkeit durch einen Ofen, insbesondere einen Schwebeofen und/oder durch einen Induktionsofen, geleitet wird.

In einer bevorzugten Ausführungsform des erfindungsgemäßen Verfahrens erfolgt die thermische Behandlung bei laufendem Schwarzblechband und stufenweise, wobei das konversionsbeschichtete Schwarzblech in einer ersten Stufe während einer Behandlungsdauer (t) zwischen 10 Sekunden und 20 Sekunden zunächst auf Temperaturen um 240°C und danach in einer zweiten Stufe kurzzeitig während einer Behandlungsdauer (t) zwischen 0,1 und 0,5 Sekunden auf eine Temperatur zwischen 280°C und 310°C und bevorzugt zwischen 290°C und 310°C erhitzt wird.

Die bei der thermischen Behandlung erfindungsgemäß einzuhaltenden Behandlungsdauern können bei einer vorgegebenen Länge der verwendeten Öfen (bspw. einem Schwebeofen bzw. einem Induktionsofen) durch die Bandgeschwindigkeit gesteuert werden.

Durch die erfindungsgemäße Wärmebehandlung wird sicher gestellt, dass die Konversionsschicht auf der Oberfläche des Schwarzblechs eine gute Haftung erfährt, welche ausreichend ist, um ein Ablösen der Konversionsschicht bei einer Umformung des konversionsbeschichteten Schwarzblechs zu verhindern. Um bei der Wärmebehandlung einerseits eine Übertrocknung und andererseits eine Untertrocknung zu vermeiden, erfolgt die thermische Behandlung gemäß der Erfindung bevorzugt in einem vorgegebenen Arbeitsbereich im Temperatur-Zeit-Diagramm (Abhängigkeit der Behandlungstemperatur T von der Behandlungszeit t), wobei ein konkreter Arbeitspunkt (ausgewählte Behandlungstemperatur T und ausgewählte Behandlungszeit t) innerhalb des vorgegebenen Arbeitsbereich je nach Bandgeschwindigkeit des laufenden Schwarzblechsbands sowie in Abhängigkeit der Zusammensetzung der Konversionsschicht und des organischen Überzugs ausgewählt werden kann. Der vorgegebene Arbeitsbereich wird dabei in einem Temperatur-Zeit-Diagramm T(t) durch den zeitlichen Verlauf der Graphen einer Maximaltemperatur $T_{max}$ (t) und einer Minimaltemperatur $T_{min}$ (t) begrenzt.

Im erfindungsgemäß bevorzugten kurzzeitigen Behandlungsbereich von bis zu 10 Sekunden weist dabei die Abhängigkeit der Maximaltemperatur ($T_{max}$) von der Behandlungsdauer (t) zumindest annähernd einen linearen Verlauf auf. Die Abhängigkeit der Maximaltemperatur ($T_{max}$) von der Behandlungsdauer (t) kann zweckmäßig und angenähert mit der Gleichung $T_{max}$ (t) = 310°C - t * (°C/s) beschrieben werden, wobei t die Behandlungsdauer mit $0 \leq t \leq 10$ s ist. Die Abhängigkeit der Minimaltemperatur ($T_{min}$) von der Behandlungsdauer (t) weist im kurzzeitigen Bereich der Behandlungsdauern t von höchstens 10 Sekunden zumindest annähernd einen linearen Verlauf auf und kann zweckmäßig und angenähert mit der Gleichung $T_{min}$ (t) = 290°C - 2 t * (°C/s) * (°C/s²) beschrieben werden, wobei t die Behandlungsdauer im Bereich $0 \leq t \leq 10$ Sekunden ist. Bei sehr niedrigen Behandlungsdauern t im Bereich unter 1 Sekunde, welche bspw. bei einer Erwärmung in einem kurzen Induktionsofen und bei hohen Bandgeschwindigkeiten im Bereich von > 30 m/min angewandt werden, liegt der (enge) Arbeitsbereich zwischen der Minimaltemperatur ($T_{min}$) und der Maximaltemperatur ($T_{max}$) bei ca. 290°C bis 310°C. Bei längeren Behandlungsdauern vergrößert sich der Temperatur-Arbeitsbereich zwischen der Minimaltemperatur ($T_{min}$) und der Maximaltemperatur ($T_{max}$) und liegt bspw. bei einer Behandlungsdauer t von 10 Sekunden zwischen ca. 270°C und 300°C und bspw. bei einer Behandlungsdauer t von 60 Sekunden zwischen ca. 200°C und 260°C.

Die erfindungsgemäße Wärmebehandlung kann in einem Verfahren zur Herstellung eines gegen Korrosion geschützten Schwarzblechs eingesetzt werden, wobei in dem Herstellungsverfahren zunächst eine Konversionsschicht auf wenigstens eine Oberfläche des Schwarzblechs aufgebracht und das mit der Konversionsschicht beschichtete Schwarzblech danach einer Wärmebehandlung gemäß der Erfindung unterzogen wird. Zweckmäßig liegt das Schwarzblech dabei als Band vor und das Aufbringen der Konversionsschicht als auch die Wärmebehandlung erfolgt bei laufendem Band mit einer vorgegebenen Bandgeschwindigkeit von zweckmäßig mehr als 30 m/min und bevorzugt mehr als 100 m/min. Nach der thermischen Behandlung (Wärmebehandlung) wird ein organischer Überzug auf die Konversionsschicht aufgebracht, z.B. in Form eines Lacks oder einer Polymerbeschichtung, wobei auch die Lackierung bzw. die Polymerbeschichtung zweckmäßig im Bandbeschichtungsverfahren (Coilcoating) bei mit der o.g. Bandgeschwindigkeit laufendem Band erfolgt. Die thermische Behandlung gemäß der Erfindung kann dabei vor aber auch während oder nach dem Aufbringen des organischen Überzugs erfolgen.

Wenn es sich bei dem organischen Überzug um einen thermoplastischen Kunststoff handelt, der in schmelzflüssiger oder angeschmolzener Form auf die Konversionssicht aufgebracht wird, ist es zweckmäßig die thermische Behandlung unmittelbar vor oder auch während des Aufbringens des organischen Überzugs durchzuführen, da zum Auf- oder Anschmelzen des thermoplastischen Kunststoffs ohnehin eine Erwärmung des Schwarzblechs auf Temperaturen oberhalb der Schmelztemperatur des Kunststoffs erforderlich ist und bspw. bei PET die Schmelztemperatur mit 240°C im Arbeitsbereich des erfindungsgemäßen Verfahrens liegt. Es ist auch möglich, die thermische Behandlung zwei- oder mehrstufig durchzuführen, bspw. in einem ersten Schritt als thermische Vorbehandlung und in einem zweiten Schritt als thermische Nachbehandlung vor bzw. nach dem Aufbringen des organischen Überzugs auf die Konversionsschicht.

Grundsätzlich kann die thermische Behandlung des konversionsbeschichteten Schwarzblechs gemäß der Erfindung entweder als Vorbehandlung vor oder als Nachbehandlung nach dem Aufbringen eines organischen Überzugs auf die Konversionsschicht oder auch während des Aufbringens des organischen Überzugs erfolgen.

Der organische Überzug kann bspw. durch eine Beschichtung mit einem thermoplastischen Polymermaterial, insbesondere PE, PP oder einem Polyester, bevorzugt PET, ausgebildet werden. Der organische Überzug kann dabei durch Auflaminieren einer Polymerfolie, insbesondere einer PET-Folie, oder durch Direktextrusion eines schmelzflüssigen thermoplastischen Kunststoffs wie PP oder PE auf eine oder beide Oberfläche(n) des Schwarzblechs aufgebracht werden.

Der organische Überzug kann auch durch eine Lackierung mit einem organischen Lack, insbesondere einem Lack auf Organosol- und/oder Epoxyphenol- und/oder Polyester-Basis, (als Weiß- oder Goldlack) ausgebildet werden.

In dem Verfahren zur Herstellung eines gegen Korrosion geschützten Schwarzblechs wird zweckmäßig als Ausgangsprodukt ein unbeschichtetes Schwarzblech in Bandform aus einem kaltgewalzten, geglühten und nachgewalzten Stahlblech mit einem Kohlenstoffgehalt von 20 bis 1.000 ppm verwendet. Die Oberfläche des Schwarzblechs wird nach Entfetten und Beizen in einem ersten Verfahrensschritt durch eine elektrochemische Behandlung inertisiert (d.h. es wird eine gegen Korrosion inerte Oberfläche erzeugt), anschließend mit Wasser gespült und schließlich in einem weiteren Schritt mit einer korrosionsstabilen Konversionsschicht beschichtet, indem auf wenigstens eine Oberfläche des Schwarzblechs eine wässrige und chromfreie Behandlungslösung aufgebracht wird. Die elektrochemische Behandlung erfolgt dabei im ersten Schritt bspw. durch Durchleiten des Schwarzblechs durch einen alkalischen Elektrolyten unter Schaltung des Schwarzblechs als Anode.

Die wässrige Behandlungslösung ist chromfrei und enthält bevorzugt mindestens einen der folgenden Bestandteile:

- metallische Bestandteile: ausgewählt aus Ti, Zr, Mn, Zn, P und Kombinationen davon, insbesondere (komplexe) Fluoride dieser Metalle, wobei Behandlungslösungen, die Ti und/oder Zr enthalten, bevorzugt sind;
- organische Bestandteile: ausgewählt aus Polyacrylat, Polycarboxylat und Kombinationen davon.

Besonders bevorzugt enthält die wässrige Behandlungslösung Titan (Ti) und Zirkonium (Zr). Nach dem Auftragen der wässrigen Behandlungslösung erfolgt eine Trocknung, indem das mit der Behandlungslösung versehene Schwarzblech während einer Trocknungsdauer von z.B. höchstens 5 Sekunden auf eine Trocknungstemperatur von höchstens 200°C erwärmt wird. Nach der Trocknung liegt die wässrige Behandlungslösung in Form einer Trockenauflage auf der Oberfläche des Schwarzblechs vor, wobei zur Erzielung einer ausreichenden Passivierung der Oberfläche gegen Korrosion in einer Sauerstoffatmosphäre die Trockenauflage der Behandlungslösung, welche die Konversionsschicht bildet, bevorzugt zwischen 25 und 150 mg/m$^2$ liegt. Bei einer Titan oder Zirkonium enthaltenden Behandlungslösung enthält die Trockenauflage bevorzugt zwischen 5 und 30 mg/m$^2$ Ti bzw. Zr.

Weitere Eigenschaften, Merkmale und Vorteile der erfindungsgemäßen Verfahren ergeben sich aus den nachfolgend unter Bezugnahme auf die Zeichnungen beschriebenen Ausführungsbeispielen. Die Zeichnungen zeigen:

Fig. 1: Graphische Darstellung der Qualität der Lackhaftung eines Lacks auf der Oberfläche eines mit einer Konversionsschicht beschichteten Schwarzblechs bei unterschiedlicher Wärmebehandlungen vor dem Lackieren in Abhängigkeit der Temperatur der Wärmebehandlung;

Fig. 2: Graphische Darstellung des optimalen Arbeitsbereichs der Wärmebehandlung in einem erfindungsgemäßen Verfahren zur thermischen Behandlung (Wärmebehandlung) eines mit einer Konversionsschicht beschichteten Schwarzblechs vor dem Lackieren mit einem Lack, in einem Temperatur-Zeit-Diagramm (Abhängigkeit der der Wärmebehandlungs-Temperatur (T/°C) von der Behandlungsdauer (t/ sec.));

Fig. 3: Graphische Darstellung des optimalen Arbeitsbereichs der Wärmebehandlung in einem erfindungsgemäßen Verfahren zur thermischen Behandlung (Wärmebehandlung) eines mit einer Konversionsschicht beschichteten Schwarzblechs vor dem Beschichten mit einer PET-Folie, in einem Temperatur-Zeit-Diagramm (Abhängigkeit der Wärmebehandlungs-Temperatur (T in °C) von der Behandlungsdauer (t in Sekunden));

Fig. 4: Schematische Darstellung einer Beschichtungsanlage zum Auftragen eines Lacks auf die Konversionsschicht eines konversionsbeschichteten Schwarzblechs und zur Durchführung einer erfindungsgemäßen Wärmebehandlung am lackierten Schwarzblech;

**Fig. 5:** Schematische Darstellung einer Beschichtungsanlage zum Aufbringen einer PET-Beschichtung auf die Konversionsschicht eines konversionsbeschichteten Schwarzblechs und zur Durchführung einer erfindungsgemäßen Wärmebehandlung am Schwarzblech;

Ausgangsprodukt für das erfindungsgemäße Verfahren des Anspruchs 1 ist ein mit einer chromfreien Konversionsschicht beschichtetes Schwarzblech. Ein solches Schwarzblech wird erfindungsgemäß einer thermischen Behandlung (Wärmebehandlung) unterzogen, um die Haftung eines organischen Überzugs auf dem Schwarzblech, insbesondere einer Lackierung oder einer Polymerbeschichtung, zu verbessern. Es hat sich dabei überraschend gezeigt, dass durch die erfindungsgemäße Wärmebehandlung im Wesentlichen die Haftung der Konversionsschicht auf der Oberfläche des Schwarzblechs (Stahlband) verbessert werden kann. Dadurch ist die Gefahr gemindert, dass sich die mit einem organischen Überzug versehene Konversionsschicht bei einer Umformung des beschichteten Schwarzblechs von der Oberfläche ablösen kann.

Die Konversionsschicht kann in einem zweistufigen Verfahren als chromfreie Konversionsschicht auf ein Schwarzblech aufgebracht werden, indem zunächst in einem ersten Schritt eine elektrochemische Behandlung des Schwarzblechs in einem Elektrolyten erfolgt und in einem zweiten Schritt, nach einer Spülung des elektrochemisch behandelten Schwarzblechs, eine chromfreie Behandlungslösung auf wenigstens eine Oberfläche des elektrochemisch behandelten Schwarzblechs aufgebracht wird, um eine vor Korrosion schützende Konversionsschicht auszubilden. Nach dem Aufbringen der wässrigen Behandlungslösung erfolgt eine Trocknung, um eine Trockenauflage der Behandlungslösung auf der Oberfläche des Schwarzblechs auszubilden, wobei die Trocknung in einem Ofen (Bandtrockner) bei Trocknungstemperaturen zwischen 50°C und 250°C erfolgen kann. In dem erfindungsgemäßen Verfahren hat es sich als zweckmäßig erwiesen, wenn die Trocknungstemperatur unter 200°C liegt und die Trocknungsdauer höchstens 5 Sekunden beträgt.

Zur Verwendung als Verpackungsstahl, beispielsweise für die Herstellung von Konserven- oder Getränkedosen, werden solche Schwarzbleche regelmäßig mit einem organischen Überzug versehen, um die Korrosionsbeständigkeit des Schwarzblechs noch weiter zu erhöhen. Insbesondere die Innenseite einer Konserven- oder Getränkedose, welche mit säurehaltiger Befüllung in Kontakt kommen kann und deshalb besonders korrosionsgefährdet ist, wird auf diese Weise gegen Korrosion geschützt. Es hat sich nun in überraschender Weise gezeigt, dass die Haftung organischer Überzüge auf der Oberfläche des Schwarzblechs wesentlich verbessert werden kann, wenn vor dem Aufbringen des organischen Überzugs das Schwarzblech einer thermischen Behandlung (Wärmebehandlung) in einem bestimmten Arbeitsbereich unterzogen wird. Je nach der angewandten thermischen Behandlungsdauer und der Behandlungstemperatur, auf welche das Schwarzblech während der thermischen Behandlung erwärmt wird, kann eine unterschiedliche Qualität der Haftung des organischen Überzugs auf der Schwarzblechoberfläche erzielt werden.

In einem bevorzugten Ausführungsbeispiel der Erfindung wird zur Herstellung eines konversionsbeschichteten Schwarzblechs ein kaltgewalztes, geglühtes und nachgewalztes Stahlband (Schwarzblech) mit einem Kohlenstoffgehalt von 20 bis 1.000 ppm zunächst durch einen alkalischen Elektrolyten unter Schaltung des Schwarzblechs als Anode geleitet, um eine gegen Korrosion inerte Stahloberfläche auszubilden. Nach einer Spülung des Schwarzblechs mit Wasser wird eine wässrige Behandlungslösung auf wenigstens eine Oberfläche des Schwarzblechs in einem no-rinse-Verfahren aufgebracht und anschließend getrocknet, um eine Trockenauflage der Behandlungslösung auf der Schwarzblechoberfläche zu erzeugen. Die Trocknung erfolgt bevorzugt am laufenden Schwarzblechband in einem Bandtrockner bei Trocknungstemperaturen von maximal 200°C und einer Trocknungsdauer von höchstens 5 Sekunden.

Die Behandlungslösung ist chromfrei und enthält bevorzugt metallische Bestandteile, ausgewählt aus der Gruppe Ti, Zr, Mn, Zn, P oder Kombinationen davon, oder organische Bestandteile von Polyacrylaten und/oder Polycarboxylaten. In einem besonders bevorzugten Ausführungsbeispiel wird als Behandlungslösung das unter der Marke GRANODINE® 1456 kommerziell erhältliche Mittel verwendet, welches Ti und Zr enthält.
Auch andere Mittel kommen für die Verwendung als Behandlungslösung in Frage.

Ein derart unter Verwendung von GRANODINE® 1456 mit einer Konversionsschicht versehenes Schwarzblech, welches eine Trockenschichtauflage von ca. 10 mg/m$^2$ Ti auf einer Seite des Schwarzblechs aufweist, wurde mit anderen organischen Lacken auf Epoxyphenol- und Polyester-Basis mit Auflagen von 5 - 10 g/m$^2$ lackiert und anschließend bei unterschiedlichen Parametern einer Wärmebehandlung unterzogen (bei unterschiedlicher Behandlungsdauer und -Temperatur), um die Qualität der Haftung des Lacks auf dem Schwarzblech in Abhängigkeit der Verfahrensparameter der Wärmebehandlung zu untersuchen.

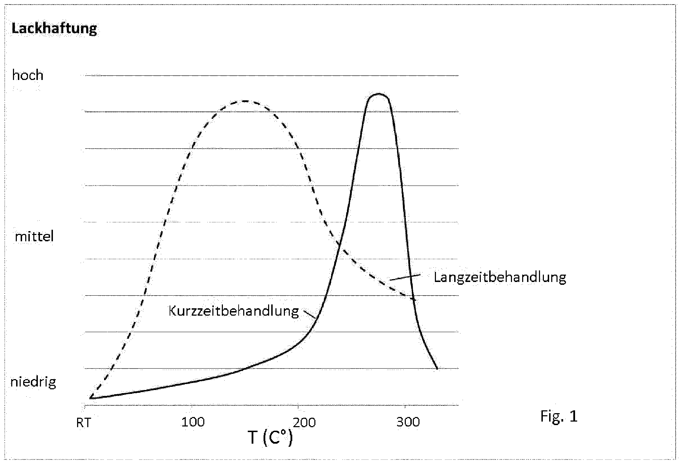

In Fig. 1 ist beispielhaft die Qualität der Haftung des Lacks auf der Oberfläche des mit der GRANODINE®1456-Konversionsschicht beschichteten Schwarzblechs bei zwei unterschiedlichen Verfahrensführungen dargestellt. In einer ersten Verfahrensführung wurde das mit der Konversionsschicht versehene Schwarzblech bei verschiedenen Behandlungstemperaturen T (°C) einer Langzeitbehandlung (Langzeittrocknung) mit einer thermischen Behandlungsdauer von t = 3 min unterzogen. Die bei den unterschiedlichen Behandlungstemperaturen dieser Langzeitbehandlung erhaltene Haftung des Lacks auf der Schwarzblechoberfläche wurde qualitativ erfasst und in dem Diagramm der Fig. 1 eingetragen. Wie aus der dadurch erhaltenen Kurve der Langzeittrocknung zu sehen, weist die Lackhaftung bei einer Behandlungstemperatur von T ≈ 150°C ein Maximum auf und fällt bei Temperaturen unterhalb von ca. 140°C und oberhalb von 140°C ab.

In entsprechender Weise wurde dasselbe konversionsbeschichtete und mit einer Lackierung versehene Schwarzblech bei unterschiedlichen Behandlungstemperaturen einer Kurzzeittrocknung mit t < 10 Sekunden unterzogen. Die dabei erhaltene Lackhaftung wurde wiederum qualitativ erfasst und - in Abhängigkeit der Wärmebehandlungstemperatur T (°C) - in das Diagramm der Fig. 1 eingetragen. Der Kurve der Kurzzeitbehandlung mit einer thermischen Behandlungsdauer von weniger als 10 Sekunden ist zu entnehmen, dass die Kurve bei einer Behandlungstemperatur im Bereich von 280°C bis 300°C und insbesondere bei ca. 288°C ein vergleichsweise scharfes Maximum aufweist. Die beiden Kurven der Fig. 1 zeigen also, dass es in Abhängigkeit der thermischen Behandlungsdauer t eine optimale Behandlungstemperatur T für die thermische Behandlung des Schwarzblechs gibt, um eine optimale Haftung des Lacks auf der Schwarzblechoberfläche zu erzielen.

Es wurde darüber hinaus in überraschender Weise festgestellt, dass es je nach Behandlungsdauer t der thermischen Behandlung nicht nur eine optimale Behandlungstemperatur T gibt, sondern auch, dass die Lackhaftung die besten Werte aufweist, wenn das Schwarzblech einer thermischen Behandlung (Wärmebehandlung) in einem vorgegebenen Arbeitsbereich unterzogen wird. Es hat sich nämlich gezeigt, dass zu hohe Behandlungstemperaturen zu einer Übertrocknung und zu niedrige Behandlungstemperaturen zu einer Untertrocknung der Konversionsschicht führen können. Sowohl eine Übertrocknung als auch eine Untertrocknung der Konversionsschicht birgt die Gefahr, dass sich bei mechanischer Belastung des lackierten Schwarzblechs die Konversionsschicht von der Schwarzblechoberfläche ablöst, was zur Folge hat, dass der auf der Konversionsschicht aufgebrachte organische Lack ebenfalls vom Schwarzblech abgelöst wird.

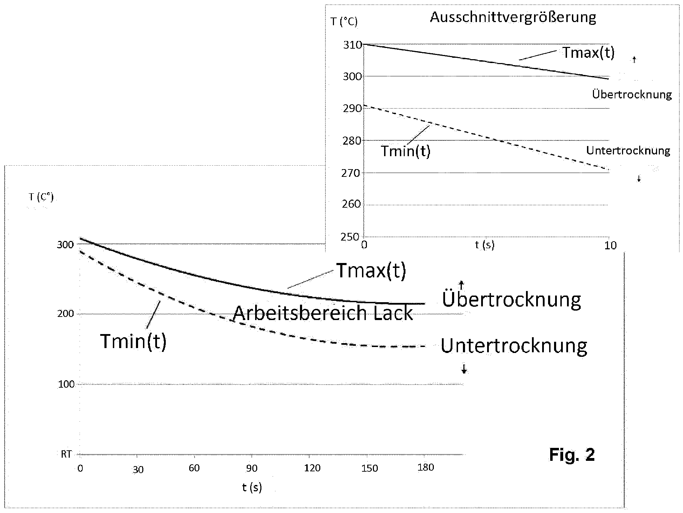

In Fig. 2 ist der für eine gute Lackhaftung optimale Arbeitsbereich für eine thermische Behandlung (Wärmebehandlung) des Schwarzblechs graphisch in einem Temperatur-Zeit-Diagramm dargestellt. Das Diagramm der Fig. 2 zeigt die Wärmebehandlungstemperatur T (in °C) in Abhängigkeit der Behandlungsdauer t (in Sekunden), wobei oben der kurzzeitige Bereich von 0 bis 10 Sekunden in einem Ausschnitt gezeigt ist. Wie sich aus dem Diagramm von Fig. 2 ergibt, existiert ein optimaler Arbeitsbereich, in dem weder eine Untertrocknung noch eine Übertrocknung der Konversionsschicht auf der Schwarzblechoberfläche erfolgt. Der Arbeitsbereich wird dabei durch eine (obere) Kurve einer Maximaltemperatur Tmax (t) und durch eine (untere) Kurve einer Minimaltemperatur Tmin (t) begrenzt. Sowohl die Maximaltemperatur Tmax als auch die Minimaltemperatur Tmin ist dabei von der Behandlungsdauer t abhängig, wobei die Maximaltemperatur Tmax und die Minimaltemperatur Tmin jeweils bei längerer Behandlungsdauer t niedriger werden. D. h. bei einer längeren Behandlungsdauer t kann eine niedrigere Behandlungstemperatur T gewählt werden, um eine thermische Behandlung im optimalen Arbeitsbereich durchzuführen.

Bevorzugt erfolgt die Beschichtung eines mit einer Konversionsschicht versehenen Schwarzblechs mit einem organischen Überzug in einem Bandbeschichtungsverfahren (Coilcoating). Dabei wird ein in Bandform vorliegendes Schwarzblech mit einer Bandgeschwindigkeit von zweckmäßig mehr als 30 m/min und bis zu 200 m/min bewegt und bei laufendem Band mit dem organischen Überzug, beispielsweise einem Lack oder einer Polymerbeschichtung, versehen. Der organische Überzug kann beispielsweise durch Aufsprühen eines organischen Lacks, insbesondere eines Organosol- oder Epoxy-Phenol-Lacks oder einer Mischung davon aufgetragen werden. Alternativ dazu kann der organische Überzug auch durch Auflaminieren einer Polymerfolie, insbesondere einer PET-, PP- oder PE-Folie oder durch Direktextrusion eines schmelzflüssigen thermoplastischen Kunststoffs (insbesondere PE oder PP) auf eine oder beide Oberflächen des Schwarzblechs aufgebracht werden.

Da das Aufbringen des organischen Überzugs auf die Konversionsschicht des Schwarzblechs bevorzugt im Bandbeschichtungsverfahren bei hohen Bandgeschwindigkeiten von zweckmäßig mehr als 30 m/min aufgebracht wird, kann die erfindungsgemäße thermische Behandlung zweckmäßig am laufenden Schwarzblechband durchgeführt werden. Die thermische Behandlung erfolgt dabei in einem Ofen, bspw. einem Schwebeofen oder einem Induktionsofen, der über eine vorgegebene (und begrenzte) Länge und damit über eine begrenzte Durchlaufstrecke verfügt. Deshalb steht nur eine begrenzte Behandlungsstrecke (bzw. eine begrenzte Behandlungsdauer t) für die Durchführung der thermischen Behandlung zur Verfügung. Dies hat zur Folge, dass bei den hohen Bandgeschwindigkeiten des Bandbeschichtungsverfahrens bevorzugt nur eine kurzzeitige thermische Behandlung im Sekundenbereich durchführbar ist, wenn die thermische Behandlung am laufenden Band erfolgen soll.

Wie sich aus der Fig. 2 im kurzzeitigen Bereich 0 ≤ t ≤ 60 Sekunden ergibt, liegen die Behandlungstemperaturen T im optimalen Arbeitsbereich dabei zwischen ca. 180°C und 310°C. Im Behandlungsdauerbereich 0 ≤ t ≤ 10 Sekunden liegen die Behandlungstemperaturen des optimalen Arbeitsbereichs zwischen ca. 270°C und 310°C, was sich insbesondere aus der Ausschnittvergrößerung der Fig. 2 ergibt.

In dem für die Durchführung der thermischen Behandlung im Bandbeschichtungsverfahren bevorzugten Kurzzeitbehandlungsbereich von 0 ≤ t ≤ 10 Sekunden kann die Kurve der Maximaltemperatur Tmax (t), welche den optimalen Arbeitsbereich nach oben hin begrenzt, annähernd mit einem Polynom ersten Grades wie folgt beschrieben werden:

$$T \max (t) = 310°C - t \ (°C/s).$$

Die Abhängigkeit der den optimalen Arbeitsbereichen nach unten begrenzenden Minimaltemperatur Tmin von der Behandlungsdauer t kann in dem kurzzeitigen Behandlungsbereich mit $0 \leq t \leq 10$ Sekunden durch eine lineare Funktion annähernd wie folgt beschrieben werden:

$$Tmin (t) = 290°C - 2 \ t * \ (°C/s),$$

wobei t die Behandlungsdauer ist.

Die erfindungsgemäße thermische Behandlung kann in einem Verfahren zur Herstellung eines mit einer Konversionsschicht und einem organischen Überzug beschichteten Schwarzblechs sowohl vor, als auch während oder nach dem Aufbringen des organischen Überzugs auf die Konversionsschicht durchgeführt werden. Ferner kann die thermische Behandlung auch in Teilschritten bzw. Stufen durchgeführt werden.

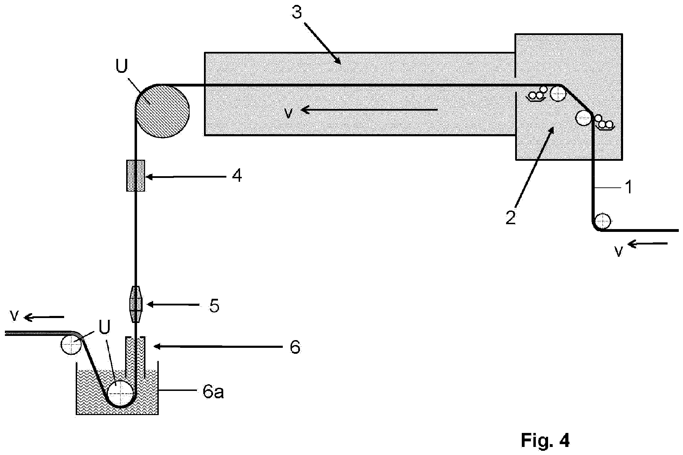

Um dies zu verdeutlichen wird nachfolgend unter Bezugnahme auf Figur 4 die Anwendung des erfindungsgemäßen Behandlungsverfahrens in einem Verfahren zur Herstellung eines mit einer Konversionsschicht und einem organischen Lack lackierten Schwarzblechs beschrieben:

In Figur 4 ist schematisch eine Beschichtungsanlage zum Auftragen eines Lacks auf die Konversionsschicht eines konversionsbeschichteten Schwarzblechs und zur Durchführung einer erfindungsgemäßen Wärmebehandlung am lackierten Schwarzblech gezeigt. Der Beschichtungsanlage wird ein mit einer Konversionsschicht versehenes Schwarzblech in Bandform mit einer vorgegebenen Bandgeschwindigkeit v zugeführt. Die Bandgeschwindigkeit v liegt dabei zweckmäßig im Bereich von 30 bis 60 m/min. Das Schwarzblechband 1 wird zunächst in eine Lackieranlage 2 geleitet, in der auf wenigstens eine Seite des Schwarzblechbands in einem Bandlackierungsverfahren ein organischer Lack aufgetragen wird. Nach dem Auftragen des Lacks erfolgt eine Lacktrocknung. Hierfür wird das Schwarzblechband 1 mit der Bandgeschwindigkeit durch einen Schwebeofen 3 geführt, in dem das Schwarzblechband 1 während einer Lacktrocknungsdauer von ca. 10 bis 15 Sekunden (je nach eingestellter Bandgeschwindigkeit v) auf eine Lacktrocknungstemperatur von höchstens 240°C und insbesondere von ca. 200 bis 220°C erwärmt wird.

Nach der Lacktrocknung wird das lackierte Schwarzblechband 1 einer Wärmebehandlung gemäß der Erfindung unterzogen. Hierfür ist stromabwärts des Schwebeofens 3 ein erster Induktionsofen 4 vorgesehen. Dieser weist (im Vergleich zum Schwebeofen 3) eine kurze Durchlaufstrecke auf. Das lackierte Schwarzblechband 1 wird über eine Umlenkrolle U aus dem Schwebeofen 3 heraus und in den ersten Induktionsofen 4 eingeführt, in dem es kurzzeitig, d.h. innerhalb einer Behandlungsdauer von weniger als 1 Sekunde und zweckmäßig von ca. 0,5 Sekunden, auf eine Temperatur im Bereich von 240°C bis 280°C erwärmt wird.

Optional kann in Bandlaufrichtung nach dem ersten Induktionsofen 4 noch ein zweiter Induktionsofen 5 vorgesehen sein, in dem das Schwarzblechband 1 einer weiteren Wärmebehandlung unterzogen werden kann. In dem zweiten Induktionsofen 5 kann das Schwarzblechband 1 bspw. während einer Behandlungsdauer von weniger als 1 Sekunde und zweckmäßig von ca. 0,3 Sekunden auf eine Temperatur im Bereich von 280°C bis 310°C erwärmt werden.

Nach der Wärmebehandlung wird das lackierte Schwarzblechband 1 in einer Kühleinrichtung 6 gekühlt, indem es bspw. in einen mit einer Kühlflüssigkeit (bspw. Wasser) gefüllten Behälter 6a eingeleitet und über Umlenkrollen U wieder herausgeführt wird. Die Abkühlung des Schwarzblechbands 1 erfolgt dabei auf Raumtemperatur.

Das erfindungsgemäße Behandlungsverfahren kann auch in einem Verfahren zur Herstellung eines mit einer Konversionsschicht und einer Polymerbeschichtung beschichteten Schwarzblechs eingesetzt werden.

Beim Aufbringen eines organischen Überzugs aus einem thermoplastischen Polymer auf die konversionsbeschichtete Oberfläche eines Schwarzblechs ist zweckmäßig eine Temperatur oberhalb der Schmelztemperatur des Polymers einzuhalten, um während des Auftragens das thermoplastische Polymermaterial schmelzflüssig zu halten oder eine Polymerfolie (z.B. eine PET-Folie) anzuschmelzen. Die Schmelztemperatur von PET liegt beispielsweise bei ca. 240°C, weshalb z. B. beim Auflaminieren einer PET-Folie auf die konversionsbeschichtete Schwarzblechoberfläche das Schwarzblech während des Auflaminierens der PET-Folie im Coilcoating-Verfahren auf Temperaturen oberhalb von 240°C gehalten wird, um die PET-Folie anzuschmelzen.

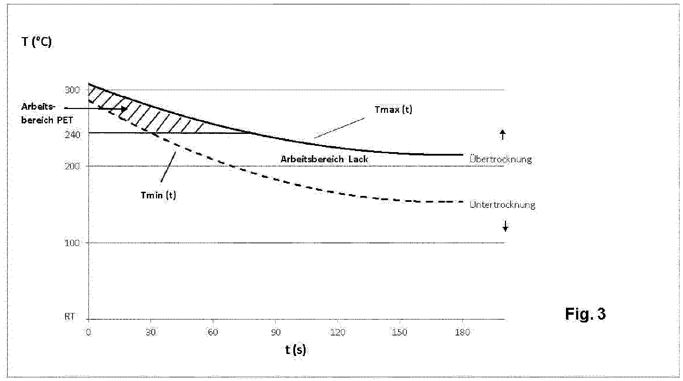

In dem Diagramm der Fig. 3, welches dem Diagramm der Fig. 2 entspricht, ist die Schmelztemperatur von PET eingezeichnet (240°C). Beim Aufbringen einer Polymerbeschichtung aus PET liegt der (schraffiert dargestellte) optimale Arbeitsbereich damit oberhalb der PET Schmelztemperatur von ca. 240°C und unterhalb der Kurve des zeitlichen Verlaufs der Maximaltemperatur Tmax (t), wie aus Fig. 3 ersichtlich. Die thermische Behandlung des konversionsbeschichteten Schwarzblechs erfolgt dabei zweckmäßig in einer ersten Stufe schon vor dem Auflaminierens der PET-Folie bei Temperaturen von T > 240°C, bevorzugt von T ≈ 280°C, und in einer zweiten Stufe nach dem Auflaminieren der PET-Folie bei Temperaturen von T > 300°C, bevorzugt von T ≈ 310°C, wobei die Behandlungszeit t in der ersten Stufe bevorzugt bei ca. 0,3 Sekunden und in der zweiten Stufe bevorzugt bei ca. 0,2 Sekunden liegt.

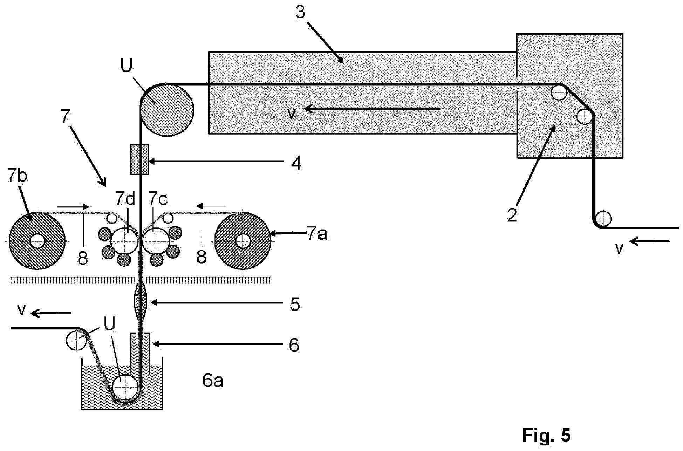

Im Folgenden wird unter Bezugnahme auf Figur 5 ein Ausführungsbeispiel zur Anwendung des erfindungsgemäßen Behandlungsverfahrens in einem Verfahren zur Herstellung eines mit einer Konversionsschicht und einer PET-Folie beschichteten Schwarzblechs beschrieben:

Figur 5 zeigt eine Beschichtungsanlage zum Aufbringen einer PET-Beschichtung auf die Konversionsschicht eines konversionsbeschichteten Schwarzblechs, in der eine erfindungsgemäße Wärmebehandlung am Schwarzblech durchgeführt werden kann. Die PET-Beschichtung wird dabei als PET-Folie ein- oder beidseitig auf ein als Band vorliegendes Schwarzblech laminiert. Das mit einer Konversionsbeschichtung versehene Schwarzblechband 1 wird hierfür mit einer Bandgeschwindigkeit v im Bereich von 90 bis 200 m/min und insbesondere von ca. 150 m/min durch einen Schwebeofen 3 geführt und während einer Behandlungsdauer von weniger als 10 Sekunden auf eine Temperatur im Bereich von ca. 200°C bis 240°C vorerwärmt.

Nach der Vorerwärmung wird das konversionsbeschichtete Schwarzblechband 1 einer Wärmebehandlung gemäß der Erfindung unterzogen. Hierfür wird das Schwarzblechband 1 über eine Umlenkrolle U aus dem Schwebeofen 3 heraus und in einen stromabwärts des Schwebeofens 3 angeordneten ersten Induktionsofen 4 eingeführt. In dem ersten Induktionsofen 4 wird das Schwarzblechband 1 kurzzeitig, d.h. (je nach eingestellter Bandlaufgeschwindigkeit) innerhalb einer Behandlungsdauer von weniger als 1 Sekunde und bevorzugt von weiniger als 0,5 Sekunden und bspw. von ca. 0,3 Sekunden, auf eine Temperatur im Bereich von ca. 240°C bis 280°C erwärmt. Die untere Temperaturgrenze von ca. 240°C entspricht dabei der Schmelztemperatur von PET.

Danach läuft das auf eine Temperatur oberhalb der Schmelztemperatur von PET erwärmte Schwarzblechband 1 in einen Laminator 7, in dem auf eine oder auf beide Seiten des Schwarzblechbands 1 eine PET-Folie 8 laminiert wird. In dem gezeigten Ausführungsbeispiel umfasst der Laminator 7 zwei Rollen 7a, 7b mit einer aufgewickelten PET-Folie 8, um das Schwarzblechband 1 beidseitig zu laminieren. Die PET-Folie 8 wird von den Rollen 7a, 7b abgezogen und über Umlenkrollen auf die jeweilige Oberfläche des Schwarzblechbands 1 geführt und dort mittels Laminatorrollen 7c, 7d, angepresst. Aufgrund der Erwärmung des Schwarzblechbands 1 schmilzt die PET-Folie beim Andrücken an die Oberfläche des Schwarzblechbands 1 zumindest teilweise auf und haftet dort an.

Nach dem Laminator 7 ist ein zweiter Induktionsofen 5 vorgesehen, in dem das Schwarzblechband 1 einer weiteren Wärmebehandlung unterzogen werden kann. In dem zweiten Induktionsofen 5 wird das Schwarzblechband 1 sehr kurzzeitig während einer Behandlungsdauer von weniger als 0,5 Sekunden und zweckmäßig im Bereich von ca. 0,1 bis 0,3 Sekunden auf eine Temperatur im Bereich von 280°C bis 310°C erwärmt. Wegen der Kurzzeitigkeit dieser nach dem Laminieren erfolgenden Erwärmung beeinflusst diese Wärmebehandlung die auflaminierte PET-Folie 8 nicht nachteilig, obwohl das Schwarzblechband 1 dabei auf Temperaturen oberhalb der Schmelztemperatur von PET erwärmt wird.

Nach der Wärmebehandlung wird das lackierte Schwarzblechband 1 wiederum in eine Kühleinrichtung 6 geleitet, um das Schwarzblechband 1 auf Raumtemperatur abzukühlen. Die in den Figuren 4 und 5 gezeigten Einrichtungen der Beschichtungsanlagen können auch in einer einzigen Anlage so kombiniert werden, dass das Schwarzblechband 1 auf einer Seite mit einer Lackierung und auf der anderen Seite mit einer PET-Beschichtung versehen werden kann. Dabei ist die Lackiereinrichtung 2 (wie in Figur 4 gezeigt) vor dem Schwebeofen 3 und der Laminator 7 (wie in Figur 5 gezeigt) stromabwärts des Schwebeofen 5 und vor der Kühleinrichtung angeordnet und die beiden Induktionsöfen 4, 5 sind vor und nach dem Laminator 7 vorgesehen (wie in Figur 5 gezeigt).

Die Erfindung ermöglicht eine Verbesserung der Haftung von organischen Überzügen auf mit einer Konversionsschicht versehenen Schwarzblechen im Bandbeschichtungsverfahren (Coilcoating), wobei bei laufendem Schwarzblechband vor, während oder nach dem Aufbringen des organischen Überzugs eine thermische Behandlung in einem vorgegebenen Arbeitsbereich im Temperatur-Zeit-Diagramm durchgeführt wird. Bei kurzzeitigen Behandlungsdauern t, welche bei hohen Bandgeschwindigkeiten von mehr als 30m/min im Bandbeschichtungsverfahren zu bevorzugen sind und zweckmäßig im Bereich von 0,1 Sekunden bis 60 Sekunden und bevorzugt im Bereich von $0 \leq t \leq 10$ Sekunden liegen, befindet sich der optimale Arbeitsbereich bei Behandlungstemperaturen zwischen 180°C und 310°C und bei den bevorzugten kurzzeitigen Behandlungsdauern im Bereich von $0 \leq t \leq 10$ Sekunden im Temperaturbereich von 270°C bis 310°C. Die Erfindung kann besonders bevorzugt in Kombination mit einem Verfahren zur Herstellung eines mit einer chromfreien Konversionsschicht versehenen Schwarzblechs eingesetzt werden. Dadurch kann die Erfindung von den Vorteilen einer chromfreien und damit umweltschonenden und nicht gesundheitsgefährdenden Konversionsbeschichtung auf Schwarzblech Gebrauch machen. In Kombination des erfindungsgemäßen Verfahrens mit dem Verfahren zur Herstellung eines mit einer chromfreien Konversionsschicht versehenen Schwarzblechs können auf umweltschonende und nicht gesundheitsgefährdende Weise sehr korrosionsstabile Schwarzbleche zur Verwendung als Verpackungsstahl hergestellt werden, wobei die so hergestellten Schwarzbleche eine hervorragende Haftung organischer Überzüge auf dem Schwarzblech sicherstellen und damit eine Umformung der Schwarzbleche, beispielsweise in Tiefzieh- oder Abstreckziehverfahren, ermöglichen, ohne dass sich die Konversionsschicht oder der organische Überzug ablösen kann.

**Patentansprüche**

1. Verfahren zur Behandlung eines Schwarzblechs, dessen Oberfläche mit einer chromfreien Konversionsschicht beschichtet ist, zur Verbesserung der Haftung der Konversionsschicht auf der Oberfläche des Schwarzblechs, **dadurch gekennzeichnet, dass** das mit der Konversionsschicht beschichtete Schwarzblech während einer thermischen Behandlungsdauer (t) von 0,1 Sekunden bis 30 Sekunden einer thermischen Behandlung unterzogen wird, indem das Schwarzblech mit einer vorgegebenen Bandgeschwindigkeit durch einen Ofen geleitet und dabei auf eine Temperatur zwischen 240°C und 320°C erhitzt wird.

2. Verfahren nach Anspruch 1, wobei die thermische Behandlungsdauer (t) zwischen zwischen 0,1 und 1 Sekunde liegt und bevorzugt unter 0,5 Sekunden beträgt, wobei das Schwarzblech während dieser Behandlungsdauer auf eine Temperatur zwischen 280°C und 320°C und bevorzugt zwischen 290°C und 310°C erhitzt wird.

3. Verfahren nach Anspruch 1 oder 2, **dadurch gekennzeichnet, dass** das Schwarzblech bei der thermischen Behandlung während der vorgegebenen Behandlungsdauer (t) auf eine Temperatur zwischen einer vorgegebenen Minimaltemperatur (Tmin) und einer vorgegebenen Maximaltemperatur (Tmax) erhitzt wird, wobei die Minimaltemperatur (Tmin) und die Maximaltemperatur (Tmax) jeweils von der Behandlungsdauer (t) abhängen und umgekehrt proportional zur Behandlungsdauer (t) sind.

4. Verfahren nach Anspruch 3, **dadurch gekennzeichnet, dass** die Abhängigkeit der Maximaltemperatur (Tmax) und/oder der Minimaltemperatur (Tmin) von der Behandlungsdauer (t) zumindest im Bereich 0 ≤ t ≤ 10 Sekunden annähernd einen linearen Verlauf aufweist.

5. Verfahren nach Anspruch 3 oder 4, **dadurch gekennzeichnet, dass** die Abhängigkeit der Maximaltemperatur (Tmax) von der Behandlungsdauer (t) der Gleichung Tmax (t) = 310°C - t * (°C/s) entspricht, wobei t die Behandlungsdauer mit 0 ≤ t ≤ 10 s ist.

6. Verfahren nach einem der Ansprüche 3 bis 5, **dadurch gekennzeichnet, dass** die Abhängigkeit der Minimaltemperatur (Tmin) von der Behandlungsdauer (t) im Bereich 0 ≤ t ≤ 10 Sekunden zumindest annähernd der Gleichung Tmin (t) = 290°C - a t * (°C/s) entspricht, wobei t die Behandlungsdauer sowie a = 2 ist.

7. Verfahren zur Herstellung eines gegen Korrosion geschützten Schwarzblechs mit folgenden Schritten:

   - Aufbringen einer chromfreien Konversionsschicht auf wenigstens eine Oberfläche des Schwarzblechs,
   - thermische Behandlung des mit der chromfreien Konversionsschicht beschichteten Schwarzblechs mit dem Verfahren nach einem der voranstehenden Ansprüche.

8. Verfahren nach Anspruch 7, wobei das Aufbringen einer chromfreien Konversionsschicht auf wenigstens eine Oberfläche des Schwarzblechs folgendes umfasst:

   - elektrochemische Behandlung des Schwarzblechs durch Durchleiten des Schwarzblechs durch einen Elektrolyten zur Ausbildung einer gegen Oxidation inerten Stahloberfläche,
   - Spülen des Schwarzblechs,
   - Aufbringen einer wässrigen und chromfreien Behandlungslösung auf wenigstens eine Oberfläche des Schwarzblechs zur Ausbildung der Konversionsschicht.

9. Verfahren nach Anspruch 7 oder 8, wobei die zur Ausbildung der Konversionsschicht auf die Oberfläche des Schwarzblechs aufgebrachte Behandlungslösung vor der thermischen Behandlung getrocknet wird, indem das mit der Behandlungslösung versehene Schwarzblech während einer Trocknungsdauer von höchstens 5 Sekunden auf eine Trocknungstemperatur von höchstens 200°C erwärmt wird.

10. Verfahren nach einem der Ansprüche 7 bis 9, **dadurch gekennzeichnet, dass** vor, während oder nach der thermischen Behandlung ein organischer Überzug in Form eines organischen Lacks oder eine Beschichtung aus einem thermoplastischen Polymermaterial auf die Konversionsschicht aufgebracht wird.

11. Verfahren nach Anspruch 9, **dadurch gekennzeichnet, dass** das Schwarzblech nach der Trocknung der Behandlungslösung auf wenigstens einer Oberfläche mit einem organischen Lack lackiert und der aufgetragene Lack in einem Lacktrocknungsschritt durch Erwärmen des lackierten Schwarzblechs während einer Lacktrocknungsdauer von höchstens 15 Sekunden auf eine Lacktrocknungstemperatur von höchstens 240°C erwärmt wird.

12. Verfahren nach Anspruch 11, **dadurch gekennzeichnet, dass** das lackierte Schwarzblech nach der Lacktrocknung in einem Induktionsofen während einer Behandlungsdauer von 0,1 bis 1 Sekunde und insbesondere von ca. 0,5 Sekunden auf Temperaturen von 290°C bis 310°C erhitzt wird.

**13.** Verfahren nach Anspruch 10, **dadurch gekennzeichnet, dass** der organische Überzug durch eine Lackierung mit einem organischen Lack, insbesondere einem Organosol-, Epoxyphenol-, Polyester-, Weißlack oder Goldlack, oder eine Beschichtung mit einem thermoplastischen Polymermaterial, insbesondere PE, PP oder einem Polyester, bevorzugt PET gebildet wird.

**14.** Verfahren nach Anspruch 10, **dadurch gekennzeichnet, dass** der organische Überzug durch Auflaminieren einer Polymerfolie aus einem thermoplastischen Polymermaterial, insbesondere einer PET-Folie, oder durch Direktextrusion eines schmelzflüssigen thermoplastischen Kunststoffs auf eine oder beide Oberfläche(n) des Schwarzblechs aufgebracht wird, wobei das konversionsbeschichtete Schwarzblech vor dem Aufbringen des organischen Überzugs während einer Behandlungsdauer von 0,1 bis 1 Sekunde und insbesondere von ca. 0,3 Sekunden auf Temperaturen im Bereich von 270°C bis 290°C und insbesondere auf ca. 280°C erwärmt wird.

**15.** Verfahren nach Anspruch 10, **dadurch gekennzeichnet, dass** das konversionsbeschichtete Schwarzblech nach dem Aufbringen des organischen Überzugs während einer Behandlungsdauer von 0,1 bis 0,5 Sekunden und insbesondere von ca. 0,2 Sekunden auf Temperaturen im Bereich von 290°C bis 310°C erwärmt wird.

**Claims**

**1.** Method for treating a black sheet, the surface of which is coated with a chromium-free conversion layer, for improving the adhesion of the conversion layer on the surface of the black sheet, **characterised in that** the black sheet coated with the conversion layer is subjected to a thermal treatment for a thermal treatment period (t) of 0.1 seconds to 30 seconds, **in that** the black sheet is passed through a furnace at a preset belt speed and thus heated to a temperature between 240°C and 320°C.

**2.** Method according to claim 1, wherein the thermal treatment period (t) lies between 0.1 and 1 second and is preferably below 0.5 seconds, wherein the black sheet is heated during this treatment period to a temperature between 280°C and 320°C and preferably between 290°C and 310°C.

**3.** Method according to claim 1 or 2, **characterised in that** the black sheet is heated during the thermal treatment for the preset treatment period (t) to a temperature between a preset minimum temperature (Tmin) and a preset maximum temperature (Tmax), wherein the minimum temperature (Tmin) and the maximum temperature (Tmax) each depend on the treatment period (t) and are inversely proportional to the treatment period (t).

**4.** Method according to claim 3, **characterised in that** the dependence of the maximum temperature (Tmax) and/or the minimum temperature (Tmin) on the treatment period (t) has approximately a linear path at least in the range $0 \leq t \leq 10$ seconds.

**5.** Method according to claim 3 or 4, **characterised in that** the dependence of the maximum temperature (Tmax) on the treatment period (t) corresponds to the equation Tmax (t) = 310°C - t * (°C/s), wherein t is the treatment period where $0 \leq t \leq 10$ s.

**6.** Method according to one of claims 3 to 5, **characterised in that** the dependence of the minimum temperature (Tmin) on the treatment period (t) in the range $0 \leq t \leq 10$ seconds corresponds at least approximately to the equation Tmin (t) = 290°C - a t * (°C/s), wherein t is the treatment period and a = 2.

**7.** Method for producing a black sheet protected against corrosion having the following steps:

- application of a chromium-free conversion layer to at least one surface of the black sheet,
- thermal treatment of the black sheet coated with the chromium-free conversion layer using the method according to one of the preceding claims.

**8.** Method according to claim 7, wherein the application of a chromium-free conversion layer to at least one surface of the black sheet comprises the following:

- electrochemical treatment of the black sheet by passing the black sheet through an electrolyte to form a steel surface which is inert to oxidation,
- rinsing the black sheet,
- application of an aqueous and chromium-free treatment solution to at least one surface of the black sheet to form the conversion layer.

**9.** Method according to claim 7 or 8, wherein the treatment solution applied to the surface of the black sheet to form the conversion layer is dried before the thermal treatment, in that the black sheet provided with the treatment solution is heated for a drying period of not more than 5 seconds to a drying temperature of not more than 200°C.

**10.** Method according to one of claims 7 to 9, **characterised in that** before, during or after the thermal treatment, an organic coating in the form of an organic lacquer or a coating of a thermoplastic polymer material is applied to the conversion layer.

11. Method according to claim 9, **characterised in that** the black sheet is lacquer-coated with an organic lacquer after drying the treatment solution on at least one surface and the applied lacquer is heated to a lacquer-drying temperature of not more than 240°C in a lacquer-drying step by heating the lacquer-coated black sheet for a lacquer-drying period of not more than 15 seconds.

12. Method according to claim 11, **characterised in that** the lacquer-coated black sheet is heated to temperatures from 290°C to 310°C after lacquer drying in an induction furnace for a treatment period of 0.1 to 1 second and in particular of about 0.5 seconds.

13. Method according to claim 10, **characterised in that** the organic coating is formed by a lacquer coating with an organic lacquer, in particular an organosol lacquer, epoxy phenol lacquer, polyester lacquer, white finish or gold varnish, or a coating with a thermoplastic polymer material, in particular PE, PP or a polyester, preferably PET.

14. Method according to claim 10, **characterised in that** the organic coating is applied by laminating a polymer film made of a thermoplastic polymer material, in particular a PET film, or by direct extrusion of a molten thermoplastic synthetic material onto one or both surface(s) of the black sheet, wherein the conversion-coated black sheet is heated to temperatures in the range from 270°C to 290°C and in particular to about 280°C, before application of the organic coating for a treatment period of 0.1 to 1 second and in particular of about 0.3 seconds.

15. Method according to claim 10, **characterised in that** the conversion-coated black sheet is heated to temperatures in the range from 290°C to 310°C after application of the organic coating for a treatment period of 0.1 to 0.5 seconds and in particular of about 0.2 seconds.

**Revendications**

1. Procédé servant au traitement d'une tôle noire, dont la surface est revêtue d'une couche de conversion sans chrome, aux fins de l'amélioration de l'adhérence de la couche de conversion sur la surface de la tôle noire, **caractérisé en ce que** la tôle noire revêtue de la couche de conversion est soumise à un traitement thermique pendant une durée de traitement (t) thermique allant de 0,1 seconde à 30 secondes **en ce que** la tôle noire est acheminée à travers un four à une vitesse de bande spécifiée et est réchauffée ce faisant à une température comprise entre 240 °C et 320 °C.

2. Procédé selon la revendication 1, dans lequel la durée de traitement (t) thermique est comprise entre 0,1 et 1 seconde et présente de manière préférée une valeur inférieure à 0,5 seconde, dans lequel la tôle noire est réchauffée, pendant ladite durée de traitement, à une température comprise entre 280 °C et 320 °C et de manière préférée entre 290 °C et 310 °C.

3. Procédé selon la revendication 1 ou 2, **caractérisé en ce que** la tôle noire est réchauffée lors du traitement thermique pendant la durée de traitement (t) spécifiée à une température comprise entre une température minimale (Tmin) spécifiée et une température maximale (Tmax) spécifiée, dans lequel la température minimale (Tmin) et la température maximale (Tmax) dépendent respectivement de la durée de traitement (t) et sont inversement proportionnelles à la durée de traitement (t).

4. Procédé selon la revendication 3, **caractérisé en ce que** la dépendance de la température maximale (Tmax) et/ou de la température minimale (Tmin) à la durée de traitement (t) présente, au moins dans une plage $0 \leq t \leq 10$ secondes, approximativement une évolution linéaire.

5. Procédé selon la revendication 3 ou 4, **caractérisé en ce que** la dépendance de la température maximale (Tmax) à la durée de traitement (t) correspond à l'équation Tmax(t) = 310 °C - t*(°C/s), dans lequel t est la durée de traitement avec $0 \leq t \leq 10$ s.

6. Procédé selon l'une quelconque des revendications 3 à 5, **caractérisé en ce que** la dépendance de la température minimale (Tmin) à la durée de traitement (t) dans la plage $0 \leq t \leq 10$ secondes correspond au moins approximativement à l'équation Tmin(t) = 290 °C - a t * (°C/s), dans lequel t est la durée de traitement ainsi que a = 2.

7. Procédé servant à la fabrication d'une tôle noire protégée contre la corrosion avec les étapes suivantes :

   - application d'une couche de conversion sans chrome sur au moins une surface de la tôle noire,
   - traitement thermique de la tôle noire revêtue de la couche de conversion sans chrome avec le procédé selon l'une quelconque des revendications précédentes.

8. Procédé selon la revendication 7, dans lequel l'application d'une couche de conversion sans chrome sur au moins une surface de la tôle noire comprend ce qui suit :

- le traitement électrochimique de la tôle noire par l'acheminement de la tôle noire à travers un électrolyte afin de réaliser une surface en acier inerte par rapport à l'oxydation,
- le rinçage de la tôle noire,
- l'application d'une solution de traitement aqueuse et sans chrome sur au moins une surface de la tôle noire pour réaliser la couche de conversion.

9. Procédé selon la revendication 7 ou 8, dans lequel la solution de traitement appliquée sur la surface de la tôle noire pour réaliser la couche de conversion est séchée avant le traitement thermique en ce que la tôle noire pourvue de la solution de traitement est chauffée pendant une durée de séchage de 5 secondes au maximum à une température de séchage de 200 °C au maximum.

10. Procédé selon l'une quelconque des revendications 7 à 9, **caractérisé en ce qu'**avant, pendant ou après le traitement thermique, un revêtement organique sous la forme d'un vernis organique ou d'un revêtement composé d'un matériau polymère thermoplastique est appliqué sur la couche de conversion.

11. Procédé selon la revendication 9, **caractérisé en ce que** la tôle noire est vernie après le séchage de la solution de traitement sur au moins une surface avec un vernis organique et le vernis appliqué est chauffé lors d'une étape de séchage de vernis en chauffant la tôle noire vernie pendant une durée de séchage de vernis de 15 secondes au maximum à une température de séchage de vernis de 240 °C au maximum.

12. Procédé selon la revendication 11, **caractérisé en ce que** la tôle noire vernie est réchauffée après le séchage de vernis dans un four à induction pendant une durée de traitement allant de 0,1 à 1 seconde et en particulier d'environ 0,5 seconde à des températures allant de 290 °C à 310 °C.

13. Procédé selon la revendication 10, **caractérisé en ce que** le revêtement organique est formé par une pose d'un vernis organique, en particulier un vernis d'organosol, d'époxy-phénol, de polyester, un vernis blanc ou un vernis or, ou par un revêtement avec un matériau polymère thermoplastique, en particulier avec du PE, du PP ou un polyester, de manière préférée du PET.

14. Procédé selon la revendication 10, **caractérisé en ce que** le revêtement organique est appliqué par laminage d'un film en polymère composé d'un matériau polymère thermoplastique, en particulier un film en PET, ou par extrusion directe d'une matière synthétique thermoplastique fondue sur une ou les deux surfaces de la tôle noire, dans lequel la tôle noire revêtue de la couche de conversion est chauffée avant l'application du revêtement organique pendant une durée de traitement allant de 0,1 à 1 seconde et en particulier d'environ 0,3 seconde à des températures dans la plage allant de 270 °C à 290 °C et en particulier à environ 280 °C.

15. Procédé selon la revendication 10, **caractérisé en ce que** la tôle noire revêtue de la couche de conversion est chauffée après l'application du revêtement organique pendant une durée de traitement allant de 0,1 à 0,5 seconde et particulier d'environ 0,2 seconde à des températures situées dans la plage allant de 290 °C à 310 °C.

Fig. 1

Fig. 2

Fig. 3

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1234181 A
- WO 9740208 A
- EP 2532769 A1
- WO 2008119675 A
- EP 2845929 A1
- DE 102013107506 A1